(19) Europäisches Patentamt

European Patent Office

Office européen des brevets

(11) **EP 1 419 015 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(21) Anmeldenummer: 02760184.8

(22) Anmeldetag: **18.06.2002**

(51) Int Cl.⁷: **B05D 3/02**, B05D 3/06

(86) Internationale Anmeldenummer:
**PCT/EP2002/006698**

(87) Internationale Veröffentlichungsnummer:
**WO 2003/002268 (09.01.2003 Gazette 2003/02)**

(54) **VERFAHREN ZUR HERSTELLUNG VON BESCHICHTUNGEN AUS THERMISCH UND MIT AKTINISCHER STRAHLUNG HÄRTBAREN BESCHICHTUNGSSTOFFEN**

METHOD FOR PRODUCING COATINGS FROM COATING MATERIALS THAT CAN BE CURED BY THE ACTION OF HEAT OR ACTINIC RADIATION

PROCEDE DE PRODUCTION DE REVETEMENTS AU MOYEN DE SUBSTANCES DE REVETEMENT POUVANT ETRE DURCIES THERMIQUEMENT ET PAR RAYONNEMENT ACTINIQUE

(84) Benannte Vertragsstaaten:
**AT BE CH CY DE DK ES FI FR GB GR IE IT LI LU MC NL PT SE TR**

(30) Priorität: **27.06.2001 DE 10130972**

(43) Veröffentlichungstag der Anmeldung:
**19.05.2004 Patentblatt 2004/21**

(73) Patentinhaber: **BASF Coatings AG**
**48165 Münster (DE)**

(72) Erfinder:
• **BAUMGART, Hubert**
**48163 Münster (DE)**

• **JOOST, Karl-Heinz**
**48317 Drensteinfurt (DE)**
• **MEISENBURG, Uwe**
**47051 Duisburg (DE)**

(74) Vertreter: **Fitzner, Uwe**
**Dres. Fitzner & Münch**
**Rechts- und Patentanwälte**
**Hauser Ring 10**
**40878 Ratingen (DE)**

(56) Entgegenhaltungen:
DE-A- 4 215 070    DE-A- 19 818 735
DE-A- 19 920 799    DE-A- 19 930 067
DE-A- 19 930 665

## Beschreibung

Die vorliegende Erfindung betrifft ein neues Verfahren zur Herstellung von Beschichtungen, insbesondere Klarlackierungen und farb- und/oder effektgebenden Mehrschichtlackierungen, aus thermisch und mit aktinischer Strahlung härtbaren Beschichtungsstoffen. Außerdem betrifft die vorliegende Erfindung Beschichtungen, insbesondere Klarlackierungen und farb- und/oder effektgebenden Mehrschichtlackierungen, herstellbar aus thermisch und mit aktinischer Strahlung härtbaren Beschichtungsstoffen. Des weiteren betrifft die vorliegende Erfindung die Verwendung des neuen Verfahrens und der neuen Beschichtungen für das Lackieren von Kraftfahrzeugkarosserien und Teilen hiervon, Kraftfahrzeugen im Innen- und Außenbereich, Bauwerken im Innen- und Außenbereich, Türen, Fenstern und Möbeln sowie für das Lackieren im Rahmen der industriellen Lackierung von Kleinteilen, Coils, Container, Emballagen, elektrotechnischen Bauteilen und weißer Ware.

Unter aktinischer Strahlung ist hier und im folgenden elektromagnetische Strahlung, wie nahes Infrarot, sichtbares Licht, UV-Strahlung oder Röntgenstrahlung, insbesondere UV-Strahlung, und Korpuskularstrahlung, wie Elektronenstrahlung, zu verstehen.

Die kombinierte Härtung durch Hitze und aktinische Strahlung wird von der Fachwelt auch als Dual-Cure bezeichnet. Demgemäß werden hier und im folgenden die in Rede stehenden Beschichtungsstoffe als Dual-Cure-Beschichtungsstoffe bezeichnet.

Dual-Cure-Beschichtungsstoffe und Verfahren und Vorrichtungen zu ihrer Härtung mit aktinischer Strahlung, insbesondere UV-Strahlung, sind aus der deutschen Patentanmeldung DE 198 18 735 A 1, Spalte 10, Zeile 31, bis Spalte 11, Zeile 16, bekannt. Die Verwendung von Inertgas ist nicht vorgesehen.

Dual-Cure-Beschichtungsstoffe sind außerdem aus den deutschen Patentanmeldungen DE 42 15 070 A 1, DE 199 30 665 A 1, DE 199 30 067 A 1, DE 199 30 664 A 1, DE 199 24 674 A 1 oder DE 199 20 799 A 1 bekannt. Sie dienen der Herstellung von Beschichtungen, insbesondere von Klarlackierungen und farb- und/oder effektgebenden Mehrschichtlackierungen. Die Härtung mit aktinischer Strahlung wird vor allem mit UV-Strahlung durchgeführt. Es wird generell empfohlen, die Bestrahlung unter Inertgas durchzuführen, um die Bildung von Ozon zu vermeiden. Andererseits wird die Bildung von Ozon nicht als ein schwerwiegendes Problem angesehen, weil das Gas durch Absaugen entfernt werden kann (vgl. DE 42 15 070 A 1, Seite 3, Zeilen 42 und 43). Die Möglichkeit, die anwendungstechnischen Eigenschaften der Beschichtungen über die Zusammensetzung der Gasatmosphäre einerseits und der Dual-Cure-Beschichtungsstoffe andererseits gezielt einzustellen und zu verbessern, geht aus den Patentanmeldungen nicht hervor.

In der nicht vorveröffentlichten deutschen Patentanmeldung DE 100 27 268 A1 wird ein Verfahren zur Herstellung einer mehrschichtigen Klarlackierung auf einem grundierten oder ungrundierten Substrat durch

(I) Applikation mindestens eines ersten Klarlacks auf das grundierte oder ungrundierte Substrat,

(II) Trocknen der resultierenden ersten Klarlackschicht(en), ohne sie dabei zu härten, oder - alternativ - Härtung der ersten Klarlackschicht(en),

(III) Applikation mindestens eines zweiten, vom ersten Klarlack stofflich verschiedenen Klarlacks und

(IV) gemeinsame Härtung der ersten und zweiten Klarlackschicht(en) oder - alternativ - Härtung der zweiten Klarlackschicht(en) für sich alleine,

beschrieben, bei dem die zweiten Klarlacke als Bindemittel

(A) mindestens ein siloxangruppenfreies (Meth)Acrylatcopolymerisat, das, bezogen auf das siloxangruppenfreie (Meth)Acrylatcopolymerisat (A), bis zu 90 Gew.-% an hydroxylgruppenhaltigen olefinisch ungesättigten Monomeren (a) einpolymerisiert enthält, wovon

(a1) 10 bis 90 Gew.-%, bezogen auf das siloxangruppenfreie (Meth)Acrylatcopolymerisat (A), 4-Hydroxybutyl (meth)acrylat und/oder 2-Alkyl-propan-1,3-diol-mono(meth)acrylat und

(a2) 0 bis 45 Gew.-%, bezogen auf das siloxangruppenfreie (Meth)Acrylatcopolymerisat (A), sonstige hydroxylgruppenhaltige olefinisch ungesättigte Monomere darstellen;

und als Vernetzungsmittel
(B) mindestens ein Tris(alkoxycarbonylamino)triazin

enthalten, wobei die ersten und die zweiten Klarlacke kein Tricyclodecandimethanol (TCD) enthalten.

Außerdem wird ein Verfahren zur Herstellung einer farb- und/oder effektgebenden Mehrschichflackierung auf einem grundierten oder ungrundierten Substrat durch

(I) Applikation mindestens eines farb- und/oder effektgebenden Lacks auf das grundierte oder ungrundierte Substrat,

(II) Trocknen der resultierenden farb- und/oder effektgebenden Lackschicht, ohne diese zu härten, oder - alternativ - Härten der farb- und/oder effektgebenden Lackschicht, wodurch die farb- und/oder effektgebende Lackierung resultiert,

(III) Applikation mindestens eines ersten Klarlacks auf die farb- und/oder effektgebende Lackschicht oder Lackierung,

(IV) Trocknen der ersten Klarlackschicht(en), ohne sie hierbei zu härten, oder - alternativ - Härtung der ersten Klarlackschicht(en) für sich alleine oder gemeinsam mit der farb- und/oder effektgebenden Lackschicht,

(V) Applikation mindestens eines zweiten, von dem ersten Klarlack stofflich verschiedenen Klarlacks auf die erste Klarlackschicht oder die erste Klarlackierung und

(VI) Härtung der zweiten Klarlackschicht(en) für sich alleine, gemeinsam mit der oder den ersten Klarlackschicht (en) oder gemeinsam mit der farb- und/oder effektgebenden Lackschicht und mit der oder den ersten Klarlackschicht(en), wodurch die farb- und/oder effektgebende Mehrschichtlackierung resultiert,

beschrieben, bei dem die zweiten Klarlacke als Bindemittel ebenfalls

(A) mindestens ein siloxangruppenfreies (Meth)Acrylatcopolymerisat, das, bezogen auf das siloxangruppenfreie (Meth)Acrylatcopolymerisat (A), bis zu 90 Gew.-% an hydroxylgruppenhaltigen olefinisch ungesättigten Monomeren (a) einpolymerisiert enthält, wovon

(a1) 10 bis 90 Gew.-%, bezogen auf das siloxangruppenfreie (Meth)Acrylatcopolymerisat (A), 4-Hydroxybutyl (meth)acrylat und/oder 2-Alkyl-propan-1,3-diol-mono(meth)acrylat und

(a2) 0 bis 45 Gew.-%, bezogen auf das siloxangruppenfreie (Meth)Acrylatcopolymerisat (A), sonstige hydroxylgruppenhaltige olefinisch ungesättigte Monomere darstellen;

und als Vernetzungsmittel

(B) mindestens ein Tris(alkoxycarbonylamino)triazin

enthalten, wobei die ersten und die zweiten Klarlacke kein Tricyclodecandimethanol (TCD) enthalten.

Vorzugsweise weist das (Meth)Acrylatcopolymerisat (A) des zweiten Klarlacks

- eine OH-Zahl von 130 bis 200, vorzugsweise 135 bis 190, bevorzugt 140 bis 185 und insbesondere 145 bis 180 mg KOH/g,

- eine Glasübergangstemperatur von -35 bis +60, insbesondere -20 bis +40°C,

- ein zahlenmittleres Molekulargewicht von 1.000 bis 5.000 Dalton, insbesondere 2.000 bis 4.500 Dalton, und

- ein massenmittleres Molekulargewicht von 2.000 bis 20.000 Dalton, insbesondere 4.000 bis 16.000 Dalton, auf.

Bei dem zweiten Klarlack kann es sich auch um einen Dual-Cure-Klarlack handeln, der unter Inertgas mit UV-Strahlung vemetzt werden kann. Vorzugsweise wird bei der Härtung mit aktinischer Strahlung eine Dosis von 1.000 bis 3.000 mJ/cm$^2$ angewandt. Die gezielte Beeinflussung und Verbesserung der anwendungstechnischen Eigenschaften der zweiten Klarlackierungen über die Zusammensetzung der Gasphase bei der UV-Härtung wird nicht beschrieben.

Aufgabe der vorliegenden Erfindung ist es, ein neues Verfahren zur Herstellung von Beschichtungen aus thermisch und mit aktinischer Strahlung, insbesondere UV-Strahlung, härtbaren Beschichtungsstoffen zu finden, das hoch kratzfeste, chemikalienbeständige, vergilbungsbeständige, überbrennstablile und auch nach der Exposition an Sonnenlicht und der Dunkellagerung farbtonstabile Beschichtungen liefert.

Demgemäß wurde das neue Verfahren zur Herstellung von Beschichtungen aus thermisch und mit aktinischer Strahlung härtbaren Beschichtungsstoffen, gefunden, bei dem man

(I) die Beschichtungsstoffe auf grundierte oder ungrundierte Substrate oder auf hierauf befindliche ungehärtete, partiell gehärtete und/oder vollständig gehärtete Lackschichten appliziert und

(II) die resultierenden Schichten aus den Beschichtungsstoffen für sich alleine oder gemeinsam mit den ungehärteten und/oder partiell gehärteten Lackschichten thermisch und mit aktinischer Strahlung härtet,

wobei

(1) die Härtung mit aktinischer Strahlung unter einer sauerstoffabgereicherten Atmosphäre durchgeführt wird und

(2) die Beschichtungsstoffe

(A) mindestens ein Bindemittel, ausgewählt aus der Gruppe, bestehend aus (Meth)Acrylatcopolymerisaten, die eine OH-Zahl von 100 bis 220 mg KOH/g, eine Glasübergangstemperatur von -35 bis +60°C, ein zahlenmittleres Molekulargewicht von 1.000 bis 10.000 Dalton und ein massenmittleres Molekulargewicht von 2.000 bis 40.000 Dalton aufweisen und die eine der OH-Zahl entsprechende Menge an hydroxylgruppenhaltigen olefinisch ungesättigten Monomeren (a) einpolymerisiert enthalten, wovon

(a1) 20 bis 90 Gew.-%, bezogen auf die hydroxylgruppenhaltigen Monomeren (a), aus der Gruppe, bestehend aus 4-Hydroxybutyl(meth)acrylat und/oder 2-Alkyl-propan-1,3-diol-mono(meth)acrylat, und

(a2) 10 bis 80 Gew.-%, bezogen auf die hydroxylgruppenhaltigen Monomeren (a), aus der Gruppe, bestehend aus sonstigen hydroxylgruppenhaltigen olefinisch ungesättigten Monomeren,

ausgewählt werden;
und

(B) 0,2 bis 8 Gew.-%, bezogen auf den Festkörper des Beschichtungsstoffs, mindestens eines Photoinitiators

enthalten.

Im folgenden wird das neue Verfahren zur Herstellung von Beschichtungen aus thermisch und mit aktinischer Strahlung härtbaren Beschichtungsstoffen als "erfindungsgemäßes Verfahren" bezeichnet.

Weitere Erfindungsgegenstände gehen aus der Beschreibung hervor.

Im Hinblick auf den Stand der Techik war es überraschend und für den Fachmann nicht vorhersehbar, daß die Aufgabe, die der vorliegenden Erfindung zugrundelag mit Hilfe des erfindungsgemäßen Verfahrens gelöst werden konnte. Insbesondere überraschte, daß durch die Verwendung einer sauerstoffabgereicherten Atmosphäre bei der Härtung mit aktinischer Strahlung, insbesondere UV-Strahlung, von Dual-Cure-Beschichtungsstoffen eine signifikante Verbesserung der Kratzfestigkeit, der Härte, der Chemikalienstabilität, der Vergilbungsbeständigkeit, der Überbrennstabilität und der Farbtonstabilität der erfindungsgemäßen Beschichtungen im Vergleich zu Beschichtungen, deren Herstellung an der Luft erfolgte, erzielt werden konnte. Vor allem aber überraschte, daß die nach dem erfindungsgemäßen Verfahren hergestellten erfindungsgemäßen Beschichtungen hochkratzfest und hart waren, weil diese beiden Eigenschaften häufig gegenläufig sind, d.h., eine hohe Kratzfestigkeit setzt häufig eine vergleichsweise niedrige Härte voraus oder aber eine hohe Härte führt zu einer vergleichsweise niedrigen Kratzfestigkeit.

Das erfindungsgemäße Verfahren wird vor allem in der Automobillackierung für die Originallackierung von Karosserien und Teilen hiervon und die Reparaturlackierung von Kraftfahrzeugen im Innen- und Außenbereich, der Lackierung von Bauwerken im Innen- und Außenbereich, der Lackierung von Möbeln, Türen und Fenstern und der industriellen Lackierung, inklusive Coil Coating, Container Coating, der Imprägnierung elektrotechnischer Bauteile, wie Wickelgüter, und der Lackierung von Kleinteilen, wie Muttern, Schrauben, Felgen oder Radkappen, und weißer Ware, wie Radiatoren, Haushaltsgeräte, Kühlschrankverkleidungen oder Waschmaschinenverkleidungen, verwendet.

Das erfindungsgemäße Verfahren geht daher aus von grundierten oder ungrundierten Substraten aus Metall, Kunststoff, Glas, Holz, Textil, Leder, Natur- und Kunststein, Beton, Zement oder Verbunden dieser Materialien, wie sie üblicherweise auf den vorstehend genannten technischen Gebieten eingesetzt werden, wobei die elektrisch leitfähigen Substrate bevorzugt sind.

Im Falle von Kunststoffen können übliche und bekannte Primerschichten oder Haftschichten angewandt werden oder die Kunststoffoberflächen können durch Beflammen oder Ätzen mit reaktiven Verbindungen wie Fluor haftfest ausgerüstet sein.

Im Falle elektrisch leitfähiger Substrate, insbesondere von Metallen, können Primer verwendet werden, wie sie in Römpp Lexikon Lacke und Druckfarben, Georg Thieme Verlag, Stuttgart, New York, 1998, "Primer", Seite 473, "Wash Primer", Seite 618, oder "Fertigungsbeschichtung", Seite 230, beschrieben werden.

Im Falle von Subtraten auf der Basis von Eisen, können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht

Die gehärtete Elektrotauchlackierung oder die nicht oder nur partiell gehärtete Elektrotauchlackschicht kann mit einem Füller überschichtet werden, der entweder für sich alleine oder gemeinsam mit der Elektrotauchlackschicht gehärtet wird (Naß-in-naß-Verfahren). Die Überschichtung mit einem Füller erfolgt insbesondere in den Bereichen, die einer starken mechanischen Beanspruchung, wie beispielsweise durch Steinschlag, ausgesetzt sind.

Beispiele geeigneter kathodischer Elektrotauchlacke sowie ggf. von Naß-in-naß-Verfahren werden in der japanischen Patentanmeldung 1975-142501 (japanische Offenlegungsschrift JP 52-065534 A 2, Chemical Abstracts Referat Nr. 87: 137427) oder den Patentschriften und - anmeldungen US 4,375,498 A 1, US 4,537,926 A 1, US 4,761,212 A 1, EP 0 529 335 A 1, DE 41 25 459 A 1, EP 0 595 186 A 1, EP 0 074 634 A 1, EP 0 505 445 A 1, DE 42 35 778 A 1, EP 0 646 420 A 1, EP 0 639 660 A 1, EP 0 817 648 A 1, DE 195 12 017 C 1, EP 0 192 113 A 2, DE 41 26 476 A 1 oder WO 98/07794 beschrieben.

Desgleichen sind geeignete Füller, insbesondere wäßrige Füller, die auch als Steinschlagschutzgrundierungen oder Funktionsschichten bezeichnet werden, aus den Patentschriften und -anmeldungen US 4,537,926 A 1, EP 0 529 335 A 1, EP 0 595 186 A 1, EP 0 639 660 A 1, DE 44 38 504 A 1, DE 43 37 961 A 1, WO 89,/10387, US 4,450,200 A 1, US 4,614,683 A 1 oder WO 490126827 bekannt.

Es ist ein besonderer Vorteil des erfindungsgemäßen Verfahrens, daß auch die Füllerlackierungen oder Steinschlagschutzgrundierungen mit Hilfe des erfindungsgemäßen Verfahrens aus den nachstehend beschriebenen, erfindungsgemäß zu verwendenden Dual-Cure-Beschichtungsstoffen hergestellt werden können.

Im Rahmen des erfindungsgemäßen Verfahrens können die auf die Elektrotauchlackierung applizierten Füllerschichten auch gemeinsam mit mindestens einer weiteren hierauf befindlichen Lackschicht gehärtet werden.

Bei elektrisch leitfähigen Substraten auf der Basis von Aluminium wird als Grundierung vorzugsweise eine durch anodische Oxidation erzeugte Aluminiumoxidschicht verwendet.

Das erfindungsgemäße Verfahren kann in den unterschiedlichsten Varianten ausfgeführt werden. Welche Variante im einzelnen angewandt wird, richtet sich nach den Erfordernisse des betreffenden technischen Gebiets, nach den zur Verfügung stehenden Lackieranlagen und nach den Aufbauten und den Funktionen die die erfindungsgemäßen Beschichtungen oder Lackierungen haben sollen.

Bei dem erfindungsgemäßen Verfahren werden in einer ersten bevorzugten Variante die nachstehend beschriebenen, erfindungsgemäß zu verwendenden Dual-Cure-Beschichtungsstoffe auf die vorstehend beschriebenen Substrate appliziert und für sich alleine gehärtet. Bei den erfindungsgemäß zu verwendenden Dual-Cure-Beschichtungsstoffen kann es sich um Dual-Cure-Klarlacke oder pigmentierte Dual-Cure-Beschichtungsstoffe, wie Füller oder Basislackierungen, handeln. Vorzugsweise handelt es sich um Dual-Cure-Klariacke. Nach dieser ersten bevorzugten Variante resultieren einschichtige Klarlackierungen oder einschichtige farb- und/oder effektgebende, elektrisch leitfähige, magnetisch abschirmende oder fluoreszierende Lackierungen.

In einer zweiten bevorzugten Variante des erfindungsgemäßen Verfahrens werden die erfindungsgemäß zu verwendenden Dual-Cure-Beschichtungsstoffe auf bereits auf den Substraten befindliche gehärtete Lackschichten appliziert. Bei diesen gehärteten Lackschichten oder Lackierungen kann es sich um die vorstehend beschriebenen Füllerlackierungen oder Steinschlagschutzgrundierungen oder um übliche und bekannte Basislackierungen und/oder Klarlackierungen handeln.

Die Basislackierungen sind aus üblichen und bekannten Basislacken herstellbar, wie sie aus den Patentanmeldungen EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A 1, EP 0 574 417 A 1, EP 0 531 510 A 1, EP 0 581 211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1 oder EP 0 817 684, Spalte 5, Zeilen 31 bis 45, bekannt sind.

Die Klarlackierungen sind aus üblichen und bekannten Klarlacken herstellbar, wie sie aus den Patentanmeldungen, Patentschriften und Veröffentlichungen DE 42 04 518 A 1, EP 0 594 068 A 1, EP 0 594 071 A 1, EP 0 594 142 A 1, E P 0 604 992 A 1, EP 0 596 460 A 1, WO 94/10211, WO 94/10212, WO 94/10213, WO 94/22969 oder WO 92/22615, US 5,474,811 A 1, US 5,356,669 A 1 oder US 5,605,965 A 1, DE 42 22 194 A 1, Produkt-Information der Firma BASF Lacke + Farben AG, "Pulverlacke", 1990, Firmenschrift von BASF Coatings AG "Pulverlacke, Pulverlacke für industrielle Anwendungen", Januar 2000, US 4,268,542 A 1, DE 195 40 977 A 1, DE 195 18 392 A 1, DE 196 17 086 A 1, DE-A-196 13 547, DE 196 52 813 A 1, DE-A-198 14 471 A 1, EP 0 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1, EP 0 002 866 A 1, DE 197 09 467 A 1, DE 42 03 278 A 1, DE 33 16 593 A 1, DE 38 36 370 A 1, DE 24 36 186 A 1, DE 20 03 579 B 1, WO 97/46549, WO 99/14254, US 5,824,373 A 1, US 4,675,234 A 1, US 4,634,602 A 1, US 4,424,252 A 1, US 4,208,313 A 1, US 4,163,810 A 1, US 4,129,488 A1, US 4,064,161 A 1, US 3,974,303 A 1, EP 0 844 286 A 1, DE 43 03 570 A 1, DE 34 07 087 A 1, DE 40 11 045 A 1, DE 40 25 215 A 1, DE 38 28 098 A 1, DE 40 20 316 A 1 oder DE 41 22 743 A 1 bekannt sind.

Die Basislackierungen und die Klarlackierungen können aber auch nach dem erfindungsgemäßen Verfahren aus den erfindungsgemäß zu verwendenden Beschichtungsstoffen hergestellt worden sein.

Vor der Applikation der erfindungsgemäß zu verwendenden Dual-Cure-Beschichtungsstoffe kann die Oberfläche der Lackierung physikalisch und/oder chemisch behandelt werden. Dabei kann die physikalische Behandlung das Bestrahlen mit aktinischer Strahlung, die Behandlung mit Ultraschall und/oder Wärme und/oder die mechanische Behandlung, beispielsweise durch Schleifen, Polieren oder Schwabbeln, und die chemische Behandlung die Anätzung mit geeigneten Chemikalien wie Säuren oder Basen und/oder das Beflammen umfassen.

In dieser zweiten bevorzugten Variante werden die Schichten aus den erfindungsgemäß zu verwendenden Dual-Cure-Beschichtungsstoffen für sich alleine gehärtet.

In einer dritten bevorzugten Variante des erfindungsgemäßen Verfahrens werden die erfindungsgemäß zu verwendenden Dual-Cure-Beschichtungsstoffe auf auf den Substraten befindliche, partiell gehärtete oder ungehärtete Lackschichten appliziert (Naß-in-naß-Verfahren). Bei diesen Lackschichten kann es sich um Füllerschichten, Basistackschichten oder Klarlackschichten handeln und sie können aus den vorstehend beschriebenen Füllern, Basislacken oder Klarlacken oder aus den erfindungsgemäß zu verwendenden Dual-Cure-Beschichtungsstoffen bestehen. Die resultierenden Schichten aus den erfindungsgemäß zu verwendenden Dual-Cure-Beschichtungsstoffen werden anschließend gemeinsam mit der darunterliegenden Lackschicht oder den darunterliegenden Lackschichten gehärtet.

Bei der zweiten und der dritten bevorzugten Variante des erfindungsgemäßen Verfahrens resultieren mehrschichtige Klarlackierungen oder farb- und/oder effektgebende, elektrisch leitfähige, magnetisch abschirmende oder fluoreszierende Mehrschichtlackierungen.

Methodisch weist die Applikation der im erfindungsgemäßen Verfahren zu verwendenden Dual-Cure-Beschichtungsstoffe keine Besonderheiten auf, sondern kann durch alle üblichen und bekannten, für den jeweiligen Beschichtungsstoff geeigneten Applikationsmethoden, wie z.B. Elektrotauchlackieren, Spritzen, Sprühen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen, es sei denn es handelt sich um Pulverlacke.

Auch die Applikation der Pulverlacke weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Bei der Applikation empfiehlt es sich unter Ausschluß von aktinischer Strahlung zu arbeiten, um eine vorzeitige Vernetzung der erfindungsgemäß zu verwendenden Dual-Cure-Beschichtungsstoffe zu vermeiden.

Die Härtung der im erfindungsgemäßen Verfahren angewandten Dual-Cure-Beschichtungsstoffe erfolgt im allgemeinen nach einer gewissen Ruhezeit oder Ablüftzeit. Sie kann eine Dauer von 30 s bis 2 h, vorzugsweise 1min bis 1 h und insbesondere 1 bis 45 min haben. Die Ruhezeit dient beispielsweise zum Verlauf und zur Entgasung der Lackschichten und zum Verdunsten von flüchtigen Bestandteilen wie gegebenenfalls vorhandenem Lösemittel und/oder Wasser. Die Ablüftung kann durch eine erhöhte Temperatur, die zu einer Härtung noch nicht ausreicht, und/oder durch eine reduzierte Luftfeuchtigkeit beschleunigt werden.

Im Rahmen des erfindungsgemäßen Verfahrens wird diese Verfahrensmaßnahme auch zur Trocknung der applizierter Lackschichten angewandt, die nicht oder nur partiell gehärtet werden sollen.

Die thermische Härtung erfolgt beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Vorzugsweise wird bei der Härtung mit aktinischer Strahlung eine Dosis von 500 bis 4.000, bevorzugt 1.000 bis 2.900, besonders bevorzugt 1.200 bis 2.800, ganz besonders bevorzugt 1.300 bis 2.700 und insbesondere 1.400 bis 2.600 mJ/cm$^2$ angewandt.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E. B. Curing Formulations for Printing Inks, Coatings and Paints, SITA Technology, Academic Press, London, United Kindom 1984, oder in der deutschen Patentanmeldung DE 19818 735 A 1, Spalte 10, Zeile 31, bis Spalte 11, Zeile 16, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß beispielsweise abwechselnd mit UV-Strahlung und Elektronenstrahlung gehärtet wird.

Die thermische Härtung und Härtung mit aktinischer Strahlung können gleichzeitig oder nacheinander angewandt werden. Werden die beiden Härtungsmethoden nacheinander angewandt, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Erfindungsgemäß wird die Härtung mit aktinischer Strahlung unter einer sauerstoffabgereicherten Atmosphäre durchgeführt.

"Sauerstoffabgereichert" bedeutet, daß der Gehalt der Atmosphäre an Sauerstoff geringer ist als der Sauerstoffgehalt von Luft (20,95 Vol.-%). Vorzugsweise liegt der maximale Gehalt der sauerstoffabgereicherten Atmosphäre bei 18, bevorzugt 16, besonders bevorzugt 14, ganz besonders bevorzugt 10 und insbesondere 6,0 Vol.-%.

Die Atmosphäre kann im Grunde sauerstofffrei sein. Wegen der fehlenden inhibierenden Wirkung von Sauerstoff kann dies aber eine starke Beschleunigung der Strahlenhärtung bewirken, wodurch Inhomogenitäten und Spannungen in den erfindungsgemäßen Beschichtungen entstehen können. Es ist daher von Vorteil, den Sauerstoffgehalt der Atmosphäre nicht auf Null Vol.-% abzusenken.

Vorzugsweise liegt der minimale Gehalt an Sauerstoff bei 0,1, bevorzugt 0,5, besonders bevorzugt 1,0, ganz besonders bevorzugt 1,5 und insbesondere 2,0 Vol.-%.

Die sauerstoffabgereicherte Atmosphäre kann in unterschiedlicher Weise bereitgestellt werden. Beispielsweise kann ein entsprechendes Gasgemisch hergestellt und in Druckflaschen zur Verfügung gestellt werden. Vorzugsweise wird die Abreicherung erzielt, indem man mindestens ein Inertgas in den jeweils erforderlichen Mengen in das über der Oberfläche der zu härtenden Schichten befindliche Luftpolster einbringt. Der Sauerstoffgehalt der über der betreffenden Oberfläche befindlichen Atmosphäre kann mit Hilfe üblicher und bekannter Methoden und Vorrichtungen zur Bestimmung von elementarem Sauerstoff kontinuierlich gemessen und ggf. automatisch auf den erwünschten Wert eingestellt werden.

Unter Inertgas wird ein Gas verstanden, das unter den angewandten Härtungsbedingungen durch die aktinische Strahlung nicht zersetzt wird, die Härtung nicht inhibiert und/oder nicht mit dem erfindungsgemäß zu verwendenden Dual-Cure-Beschichtungsstoff reagiert. Vorzugsweise werden Stickstoff, Kohlendioxid, Helium, Neon oder Argon, insbesondere Stickstoff und/oder Kohlendioxid, verwendet.

Der erfindungsgemäß zu verwendende Beschichtungsstoff enthält mindestens ein, insbesondere ein, (Meth)Acrylatcopolymerisat (A) als Bindemittel. In manchen Fällen kann es aber vorteilhaft sein, mindestens zwei, insbesondere zwei, (Meth)Acrylatcopolymerisate (A) zu verwenden, die im Rahmen der nachstehend angegebenen wesentlichen Bereiche für OH-Zahl, Glasübergangstemperatur und zahlen- und massenmittleres Molekulargewicht ein unterschiedliches Eigenschaftsprofil aufweisen.

Das (Meth)Acrylatcopolymerisat (A) weist

- eine OH-Zahl von 100 bis 220, vorzugsweise 130 bis 200, bevorzugt 140 bis 190 und insbesondere 145 bis 180 mg KOH/g,

- eine Glasübergangstemperatur von -35 bis +60, insbesondere -25 bis +40°C,

- ein zahlenmittleres Molekulargewicht von 1.000 bis 10.000 Dalton, insbesondere 1.500 bis 5.000 Dalton, und

- ein massenmittleres Molekulargewicht von 2.000 bis 40.000 Dalton, insbesondere 3.000 bis 20.000 Dalton, auf.

Das (Meth)Acrylatcopolymerisat (A) enthält eine seiner OH-Zahl entsprechende Menge an hydroxylgruppenhaltigen olefinisch ungesättigten Monomeren (a) einpolymerisiert, wovon

(a1) 20 bis 90, vorzugsweise 22 bis 85, bevorzugt 25 bis 80 und insbesondere 28 bis 75 Gew.-%, jeweils bezogen auf die hydroxylgruppenhaltigen Monomeren (a), aus der Gruppe, bestehend aus 4-Hydroxybutyl(meth)acrylat und 2-Alkyl-propan-1,3-diol-mono(meth)acrylaten, und

(a2) 10 bis 80, vorzugsweise 15 bis 78, bevorzugt 10 bis 75 und insbesondere 25 bis 72 Gew.-%, jeweils bezogen auf die hydroxylgruppenhaltigen Monomeren (a), aus der Gruppe, bestehend aus sonstigen hydroxylgruppenhaltigen olefinisch ungesättigten Monomere,

ausgewählt werden.

Beispiele geeigneter 2-Alkyl-propan-1,3-diol-mono(meth)acrylate (a1) sind 2-Methyl-, 2-Ethyl-, 2-Propyl-, 2-Isopropyl- oder 2-n-Butyl-propan-1,3-diol-mono(meth)acrylat, wovon 2-Methyl-propan-1,3-diol-mono(meth)acrylat besonders vorteilhaft ist und bevorzugt verwendet wird.

Beispiele geeigneter sonstiger hydroxylgruppenhaltiger olefinisch ungesättigter Monomere (a2) sind Hydroxyalkylester von olefinisch ungesättigen Carbon-, Sulfon- und Phosphonsäuren und sauren Phosphor- und Schwefelsäureestem, insbesondere Carbonsäuren, wie Acrylsäure, beta-Carboxyethylacrylat, Methacrylsäure, Ethacrylsäure und Crotonsäure, insbesondere Acrylsäure und Methacrylsäure. Sie leiten sich von einem Alkylenglykol ab, der mit der Säure verestert ist, oder sie sind durch die Umsetzung der Säure mit einem Alkylenoxid wie Ethylenoxid oder Propylenoxid erhältlich. Bevorzugt werden die Hydroxyalkylester, in denen die Hydroxyalkylgruppe bis zu 20 Kohlenstoffatome enthält, verwendet, insbesondere, 2-Hydroxyethyl- oder 3-Hydroxypropylacrylat oder -methacrylatt; 1,4-Bis (hydroxymethyl)cyclohexan- oder Octahydro-4,7-methano-1H-inden-dimethanolmonoacrylat oder -monomethacrylat; oder Umsetzungsprodukte aus cydischen Estern, wie z.B. epsilon-Caprolacton und diesen Hydroxyalkylestern; oder olefinisch ungesättigte Alkohole wie Allylalkohol; oder Polyole, wie Trimethylolpropanmono- oder diallylether oder Pentaerythritmono-, -di- oder -triallylether; verwendet. Diese höherfunktionellen Monomeren (a2) werden im allgemeinen nur in untergeordneten Mengen eingesetzt. Im Rahmen der vorliegenden Erfindung sind hierbei unter untergeordneten Mengen an höherfunktionellen Monomeren (a2) solche Mengen zu verstehen, welche nicht zur Vernetzung oder Gelierung der (Meth)Acrylatcopolymerisate (A) führen, es sei denn, sie sollen in der Form von vernetzten Mikrogelteilchen vorliegen.

Des weiteren kommt ethoxylierter und/oder propoxylierter Allylakohol, der von der Firma Arco Chemicals vertrieben wird, oder 2-Hydroxyalkylallylether, insbesondere 2-Hydroxyethylallylether, als Monomere (a2) in Betracht. Sofern verwendet, werden sie vorzugsweise nicht als alleinige Monomere (a2), sondern in einer Menge von 0,1 bis 10 Gew.-%, bezogen auf das (Meth)Acrylatcopolymerisat (A), eingesetzt.

Des weiteren kommen Umsetzungsprodukte aus den vorstehend aufgeführten olefinisch undgesättigten Säuren, insbesondere Acrylsäure und/oder Methacrylsäure, mit dem Glycidylester einer in alpha-Stellung verzweigten Monocarbonsäure mit 5 bis 18 Kohlenstoffatomen je Molekül, insbesondere eine Versatic®-Säure, oder anstelle der Umsetzungsprodukte eine äquivalenten Menge an den vorstehend aufgeführten olefinisch undgesättigten Säuren, insbesondere Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure (vgl. Römpp Lexikon Lacke und Druckfärben, Georg Thieme Verlag, Stuttgart, New York, 1998, »Versatic®-Säuren«, Seiten 605 und 606), umgesetzt wird.

Nicht zuletzt sind Acryloxysilan-enthaltende Vinylmonomere als Monomere (a2) geeignet, die durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure und/oder weiterer hydroxylgruppehaltiger Monomere (a1) und (a2) herstellbar sind.

Außer den Hydroxylgruppen können die (Meth)acrylatcopolymerisate im statistischen Mittel

(i) mindestens eine, insbesondere mindestens zwei, reaktive funktionelle Gruppe(n), die mit komplementären reaktiven funktionellen Gruppen thermisch initiierte Vernetzungsreaktionen eingehen können, und/oder

(ii) mindestens eine, insbesondere mindestens zwei, reaktive funktionelle Gruppe(n) mit mindestens einer, insbesondere einer, mit aktinischer Strahlung aktivierbaren Bindung

im Molekül enthalten.

Beispiele geeigneter erfindungsgemäß zu verwendender komplementärer reaktiver funktioneller Gruppen sind in der folgenden Übersicht zusammengestellt. In der Übersicht steht die Variable R für einen acydischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

**Übersicht: Beispiele komplementärer reaktiver funktioneller Gruppen**

| Bindemittel | und | Vernetzungsmittel |
|---|---|---|
| | oder | |
| Vernetzungsmittel und | | Bindemittel |
| -SH | | -C(O)-OH |
| -NH$_2$ | | -C(O)-O-C(O)- |
| -O-(CO)-NH-(CO)-NH$_2$ | | -NCO |
| -O-(CO)-NH$_2$ | | -NH-C(O)-OR |
| >NH | | -CH$_2$-OH |
| | | -CH$_2$-O-R |
| | | -NH-CH$_2$-O-R |
| | | -NH-CH$_2$-OH |
| | | -N(-CH$_2$-O-R)$_2$ |
| | | -NH-C(O)-CH(-C(O)OR)$_2$ |
| | | -NH-C(O)-CH(-C(O)OR)(-C(O)-R) |

-NH-C(O)-NR´R´´

> Si(OR)$_2$

$$\underset{\text{-CH-CH}_2}{\overset{\displaystyle O}{\bigwedge}}$$

$$\underset{\text{-CH-CH}_2}{\overset{\displaystyle\overset{O}{\parallel}}{\underset{O\qquad O}{C}}}$$

-C(O)-OH

$$\underset{\text{-CH-CH}_2}{\overset{\displaystyle O}{\bigwedge}}$$

-C(O)-N(CH$_2$-CH$_2$-OH)$_2$

Die Auswahl der jeweiligen komplementären reaktiven funktionellen Gruppen richtet sich zum einen danach, daß sie bei der Herstellung der Bindemittel (A) sowie bei der Herstellung, der Lagerung, der Applikation und dem Härtungsprozeß keine unerwünschten Reaktionen, insbesondere keine vorzeitige Vernetzung, eingehen und/oder die Härtung mit aktinischer Strahlung nicht stören oder inhibieren dürfen, und zum anderen danach, in welchem Temperaturbereich die Vernetzung stattfinden soll.

Vorzugsweise werden die komplementären reaktiven funktionellen Gruppen (i) zum einen aus der Gruppe, bestehend aus Thiol-, Amino-, N-Methylolamino-, N-Alkoxymethylamino-, Imino-, Carbamat-, Allophanat- und/oder Carboxylgruppen, und zum anderen aus der Gruppe bestehend aus Anhydrid-, Carboxyl-, Epoxy-, blockierten und unblockierten Isocyanat-, Urethan-, Alkoxycarbonylamino- Methylol-, Methylolether-, Carbonat-, Amino- und/oder beta-Hydroxyalkylamidgruppen, ausgewählt.

Selbstvernetzende Bindemittel (A) enthalten insbesondere Methylol-, Methylolether- und/oder N-Alkoxymethylaminogruppen (i).

Die komplementären reaktiven funktionellen Gruppen können mit Hilfe der nachstehend beschriebenen olefinisch ungesättigten Monomeren (a3), die die betreffenden reaktiven funktionellen Gruppen enthalten, oder durch polymeranaloge Reaktionen in die (Meth)Acrylatcopolymerisate eingeführt werden.

Beispiele geeigneter olefinisch ungesättigter Monomere (a3) sind

(a31) Monomere, welche mindestens eine Aminogruppe pro Molekül tragen, wie

- Aminoethylacrylat, Aminoethylmethacrylat, Allylamin oder N-Methyla
- minoethylacrylat; und/oder

(a32) Monomere, welche mindestens eine Säuregruppe pro Molekül tragen, wie

- Acrylsäure, beta-Carboxyethylacrylat, Methacrylsäure, Ethacrylsäure, Crotonsäure, Maleinsäure, Fumarsäure oder Itaconsäure;

- olefinisch ungesättigte Sulfon- oder Phosphonsäuren oder deren Teilester;

- Maleinsäuremono(meth)acryloyloxyethylester, Bemsteinsäuremono(meth)acryloyloxyethylester oder Phthalsäuremono(meth)acryloyloxyethylester; oder

- Vinylbenzoesäure (alle Isomere), alpha-Methylvinylbenzoesäure (alle Isomere) oder Vinylbenzsolsulfonsäure (alle Isomere).

(a33) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Ein Beispiel zur Einführung reaktiver funktioneller Gruppen über polymeranaloge Reaktionen ist die Umsetzung eines Teils der im Bindemittel (A) vorhandenen Hydroxylgruppen mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Bindemitteln (A). Weitere Beispiele geeigneter Methoden dieser Art sind aus den Patentschriften US 4,758,632 A 1, US 4,301,257 A 1 oder US 2,979,514 A 1 bekannt. Außerdem ist es möglich, Carboxylgruppen durch die polymeranaloge Reaktion eines Teils der Hydroxylgruppen mit Carbonsäureanhydriden, wie Maleinsäureanhydrid oder Phthalsäureanhydrid, einzuführen.

Darüber hinaus können die (Meth)Acrylatcopolymerisate (A) noch mindestens ein olefinisch ungesättigtes Monomer (a4) enthalten, die im wesentlichen oder völlig frei von reaktiven funktionellen Gruppen sind, wie:

Monomere (a41):

Im wesentlichen säuregruppenfreie (Meth)acrylsäureester wie (Meth)Acrylsäurealkyl- oder -cycloalkylester mit bis zu 20 Kohlenstoffatomen im Alkylrest, insbesondere Methyl-, Ethyl-, n-Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethoxytriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate (weitere Beispiele geeigneter Monomere (a41) dieser Art sind aus der Offenlegungsschrift DE 196 25 773 A 1, Spalte 3, Zeile 65, bis Spalte 4, Zeile 20, bekannt). Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3-oder -1,4-diol-di(meth)acrylat; Trimethylolpropan-di- oder -tri(meth)acrylat; oder Pentaerythrit-di-, -tri- oder -tetra(meth)acrylat enthalten. Rahmen der vorliegenden Erfindung sind hierbei unter untergeordneten Mengen an höherfunktionellen Monomeren (a41) solche Mengen zu verstehen, welche nicht zur Vernetzung oder Gelierung der Copolymerisate führen, es sei denn, sie sollen in der Form von vernetzten Mikrogelteilchen vorliegen.

Monomere (a42):

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).

Monomere (a43):

Diarylethylene, insbesondere solche der allgemeinen Formel I:

$$R^1R^2C=CR^3R^4 \qquad \text{(I)},$$

worin die Reste $R^1$, $R^2$, $R^3$ und $R^4$ jeweils unabhängig voneinander für Wasserstoffatome oder substituierte oder unsubstituierte Alkyl-, Cycloalkyl-, Alkylcydoalkyl-, Cycloalkylalkyl-, Aryl-, Alkylaryl-, Cycloalkylaryl- Arylalkyl- oder Arylcydoalkylreste stehen, mit der Maßgabe, daß mindestens zwei der Variablen $R^1$, $R^2$, $R^3$ und $R^4$ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, -Propyl- oder - Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3- oder 4-Phenylcyclohex-1-yl. Beispiele geeigneter Arylalkylreste sind 2-, 3- oder 4-Methyl-, -Ethyl-, -Propyl- oder-Butylphen-1-yl. Beispiele geeigneter Arylcycloalkylreste sind 2-, 3- oder 4-Cyclohexylphen-1-yl. Vorzugsweise handelt es sich bei den Arylresten $R^1$, $R^2$, $R^3$ und/oder $R^4$ um Phenyl- oder Naphthylreste, insbesondere Phenylreste. Die in den Resten $R^1$, $R^2$, $R^3$ und/oder $R^4$ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; und/oder Arylthio-, Alkylthio- und Cycloalkylthioreste. Besonders vorteilhaft sind Diphenylethylen, Dinaphthalinethylen, cis- oder trans- Stilben oder Vinylidenbis(4-nitrobenzol), insbesondere Diphenylethylen (DPE), weswegen sie bevorzugt verwendet werden. Im Rahmen der vorliegenden Erfindung werden die Monomeren (a43) eingesetzt, um die Copolymerisation in vorteilhafter Weise derart zu regeln, daß auch eine radikalische Copolymerisation in Batch-Fahrweise möglich ist.

Monomere (a44):

Vinylaromatische Kohlenwasserstoffe wie Styrol, Vinyltoluol, Diphenylethylen oder alpha-Alkylstyrole, insbesondere alpha-Methylstyrol.

Monomere (a45):

Nitrile wie Acrylnitril und/oder Methacrylnitril.

Monomere (a46):

Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.

Monomere (a47):

Allylverbindungen, insbesondere Allylether und -ester wie Allylmethyl-, -ethyl-, -propyl- oder -butylether oder Allylacetat, -propionat oder -butyrat.

Monomere (a48):

Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind.

Die Monomeren (a1) und (a2) sowie (a3) und/oder (a4) werden so ausgewählt, daß die vorstehend angegebenen OH-Zahlen und Glasübergangstemperaturen resultieren. Außerdem werden die Monomeren (a3), die reaktive funktionelle Gruppen enthalten, nach Art und Menge so ausgewählt, daß sie die Vernetzungsreaktionen der Hydroxylgruppen mit den nachstehend beschriebenen Verbindungen (B) nicht inhibieren oder völlig verhindern.

Die Auswahl der Monomeren (a) zur Einstellung der Glasübergangstemperaturen kann vom Fachmann unter Zuhilfenahme der folgenden Formel von Fox, mit der die Glasübergangstemperaturen von Poly(meth)acrylaten näherungsweise berechnet werden können, vorgenommen werden:

$$1/Tg = \sum_{n=1}^{n=x} W_n/Tg_n; \qquad \Sigma_n W_n = 1$$

$Tg$ = Glasübergangstemperatur des Poly(meth)acrylats;
$W_n$ = Gewichtsanteil des n-ten Monomers;
$Tg_n$ = Glasübergangstemperatur des Homopolymers aus dem n-ten Monomer und
$x$ = Anzahl der verschiedenen Monomeren.

Die Herstellung der erfindungsgemäß zu verwendenden (Meth)Acrylatcopolymerisate (A) weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von vorzugsweise 50 bis 200°C.

Beispiele geeigneter Copolymerisationsverfahren werden in den Patentanmeldungen DE 197 09 465 A 1, DE 197 09 476 A 1, DE 28 48 906 A 1, DE 195 24 182 A 1, DE 198 28 742 A 1, DE 196 28 143 A 1, DE 196 28 142 A 1, EP 0 554 783 A 1, WO 95/27742, WO 82/02387 oder WO 98/02466 beschrieben. Die Copolymerisation kann indes auch in den Polyolen als Reaktionsmedium durch geführt werden, wie dies beispielsweise in der deutschen Patentanmeldung DE 198 50 243 A 1 beschrieben wird.

Beispiele geeigneter radikalischer Initiatoren sind Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Peroxodicarbonate; Kalium-, Natrium- oder Ammoniumperoxodisulfat; Azoinitiatoren, beispielsweise Azodinitrile wie Azobisisobutyronitril; C-C-spaltende Initiatoren wie Benzpinakolsilylether, oder eine Kombination eines nicht oxidierenden Initiators mit Wasserstoffperoxid. Es können auch Kombinationen der vorstehend beschriebenen Initiatoren eingesetzt werden.

Weitere Beispiele geeigneter Initiatoren werden in der deutschen Patentanmeldung DE 196 28 142 A 1, Seite 3, Zeile 49, bis Seite 4, Zeile 6, beschrieben.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,2 bis 20 Gew.-%, ganz besonders bevorzugt 0,5 bis 15 Gew.-% und insbesondere 1,0 bis 10 Gew.-% beträgt.

Des weiteren können Thiocarbonylthio-Verbindungen oder Mercaptane wie Dodecylmercaptan als Kettenübertragungsmittel oder Molekulargewichtsregler verwendet werden.

Vorzugsweise werden die (Meth)Acrylacopolymerisate (A) nach Art und Menge so ausgewählt, daß die erfindungsgemäßen Dual-Cure-Beschichtungsstoffe nach ihrer Aushärtung einen Speichermodul E' im gummielastischen Bereich von mindestens $10^{7,5}$ Pa und einen Verlustfaktor $\tan\delta$ bei 20 °C von maximal 0,10 aufweisen, wobei der Speichermodul E' und der Verlustfaktor mit der Dynamisch-Mechanischen Thermo-Analyse an freien Filmen mit einer Schichtdicke von $40 \pm 10$ µm gemessen worden sind (vgl. hierzu das deutsche Patent DE 197 09 467 C 2).

Die reaktiven funktionellen Gruppen mit mindestens einer mit aktinischer Strahlung aktivierbaren Bindung können in den (Meth)Acrylatcopolymerisaten (A) enthalten sein. Sind in den erfindungsgemäß zu verwendenden Beschichtungsstoffen keine weiteren mit aktinischer Strahlung härtbare Bestandteile enthalten, weisen die (Meth)Acrylatcopolymerisate (A) obligatorisch diese Gruppen auf.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vemetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel (A) enthält im statistischen Mittel mindestens eine der vorstehend beschriebenen mit aktinischer Strahlung aktivierbaren Gruppen. Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbomenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Hamstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Der Gehalt der erfindungsgemäß zu verwendenden Beschichtungsstoffe an den Bindemitteln (A) kann breit variieren und richtet sich in erster Linie nach der Funktionalität der Bindemittel (A) einerseits und der ggf. vorhandenen, nachstehend beschriebenen Verbindungen (C) andererseits. Vorzugsweise liegt der Gehalt, bezogen auf den Festkörper des erfindungsgemäß zu verwendenden Beschichtungsstoffs, bei 20 bis 99,8, bevorzugt 25 bis 95, besonders bevorzugt 30 bis 90, ganz besonders bevorzugt 35 bis 85 und insbesondere 40 bis 80 Gew.-%.

Die erfindungsgemäß zu verwendenden Beschichtungsstoffe enthalten mindestens einen Photoinitiator, vorzugsweise mindestens zwei und insbesondere drei Photoinitiatoren (B) in einer Menge von 0,2 bis 8, vorzugsweise 0,3 bis 6, bevorzugt 0,4 bis 4, besonders bevorzugt 0,5 bis 2 und insbesondere 0,8 bis 1,5 Gew.-%, jeweils bezogen auf den Festkörper des erfindungsgemäßen Beschichtungsstoffs.

Beispiele geeigneter Photoinitiatoren (B) werden in Römpp Lexikon Lacke und Druckfarben, Georg Thieme Verlag, Stuttgart, New York, 1998, Seiten 444 bis 446, beschrieben.

Photoinitatoren sind handelsübliche Verbindungen und werden beispielsweise von der Firma BASF Aktiengesellschaft unter der Marke LUCIRIN, von der Firma Ciba Specialty Chemicals unter der Marke IRGACURE oder von der Firma Rahn unter der Marke GENOCURE vertrieben.

Vorzugsweise enthält der erfindungsgemäß zu verwendende Dual-Cure-Beschichtungsstoff noch mindestens einen Bestandteil, ausgewählt aus der Gruppe, bestehend aus niedermolekularen und von den (Meth)Acrylatcopolymerisaten (A) verschiedenen, oligomeren und polymeren Verbindungen (C), die im statistischen Mittel

(i) mindestens eine, vorzugsweise mindestens zwei, der vorstehend beschriebenen reaktiven funktionellen Gruppe(n), die mit komplementären reaktiven funktionellen Gruppen, insbesondere Hydroxylgruppen, thermisch initiierte Vernetzungsreaktionen eingehen können, und/oder

(ii) mindestens eine, vorzugsweise mindestens zwei, der vorstehend beschriebenen reaktiven funktionellen Gruppe(n) mit mindestens einer mit aktinischer Strahlung aktivierbaren Bindung

im Molekül aufweisen.

Enthält das vorstehend beschriebene (Meth)Acrylatcopolymerisat (A) keine der vorstehend beschriebenen, selbstvernetzenden reaktiven fuktionellen Gruppen, enthält der erfindungsgemäß zu verwendende Dual-Cure-Beschichtungsstoff obligatorisch mindestens eine, insbesondere eine, niedermolekulare, oligomere und/oder polymere, insbesondere eine niedermolekulare oder oligomere, Verbindung (C) mit reaktiven funktionellen Gruppen (i), die mit Hydroxylgruppen thermisch initiierte Vemetzungsreaktionen eingehen können. Geeignete Verbindungen (C) dieser Art sind übliche und bekannte Vernetzungsmittel, wie sie beispielsweise aus der deutschen Patentanmeldung DE 199 24 171 A 1, Seite 7, Zeile 38, bis Seite 8, Zeile 46, i.V.m. Seite 3, Zeile 43, bis Seite 5, Zeile 31, bekannt sind. Vorzugsweise werden blockierte, partiell blockierte oder unblockierte Polyisocyanate angewandt.

Enthält das vorstehend beschriebene (Meth)Acrylatcopolymerisat (A) keine der vorstehend beschriebenen reaktiven funktionellen Gruppen (ii) mit mindestens einer mit aktinischer Strahlung aktivierbaren Bindung, enthält der erfindungsgemäß zu verwendende Dual-Cure-Beschichtungsstoff obligatorisch mindestens eine niedermolekulare, oligomere und/oder polymere Verbindung (C) mit mindestens einer, vorzugsweise mindestens zwei, bevorzugt mindestens drei, besonders bevorzugt mindestens vier und insbesondere mindestens fünf reaktiven funktionellen Gruppen (ii).

Beispiele geeigneter niedermolekularer, oligomerer und/oder polymerer Verbindung (C) mit mindestens einer Gruppe (ii) werden im Detail in Römpp Lexikon Lacke und Druckfarben, Georg Thieme Verlag, Stuttgart, New York, 1998, »Reaktivverdünner« Seiten 491 und 492, in der deutschen Patentanmeldung DE 199 08 013 A 1, Spalte 6, Zeile 63, bis Spalte 8, Zeile 65, in der deutschen Patentanmeldung DE 199 08 018 A 1, Seite 11, Zeilen 31 bis 33, in der deutschen Patentanmeldung DE 198 18 735 A 1, Spalte 7, Zeilen 1 bis 35, oder dem deutschen Patent DE 197 09 467 C 1, Seite 4, Zeile 36, bis Seite 5, Zeile 56, beschrieben. Vorzugsweise werden Pentaerythrittetraacrylat, Dipentaerythritpentaacrylat und/oder aliphatische Urethanacrylate mit sechs Acrylatgruppen im Molekül eingesetzt

Der erfindungsgemäß zu verwendende Dual-Cure-Beschichtungsstoff kann an Stelle der vorstehend beschriebenen Verbindungen (C) oder anstelle von diesen mindestens eine, insbesondere mindestens zwei, niedermolekulare, oligomere und/oder polymere Verbindung(en) (C) mit mindestens einer, insbesondere mindestens zwei, Gruppe(n) (i) und mindestens einer, insbesondere mindestens zwei, Gruppe(n) (ii) enthalten. Beispiele geeigneter Verbindungen (C) dieser Art werden im Detail in der europäischen Patentanmeldung EP 0 928 800 A 1, Seite 3, Zeilen 17 bis 54, und Seite 4, Zeilen 41 bis 54, oder in der deutschen Patentanmeldung DE 198 18 735 A 1, Spalte 3, Zeile 16, bis Spalte 6, Zeile 33, beschrieben. Vorzugsweise werden Isocyanatoacrylate, die aus Polyisocyanaten und den vorstehend beschriebenen hydroxylgruppenhaltigen Monomeren (a1) und/oder (a2) herstellbar sind, verwendet.

Darüber hinaus kann der erfindungsgemäß zu verwendende Dual-Cure-Beschichtungsstoff noch mindestens einen Zusatzstoff (D), ausgewählt aus der Gruppe, bestehend aus physikalisch oder rein thermisch härtbaren, von den Bindemitteln (A) verschiedenen Bindemitteln; thermisch härtbaren Reaktivverdünnern; molekulardispers löslichen Farbstoffen, Lichtschutzmitteln, wie UV-Absorber und reversible Radikalfänger (HALS); Antioxidantien; niedrig- und hochsiedenden ("lange") organischen Lösemitteln; Entlüftungsmitteln; Netzmitteln; Emulgatoren; Slipadditiven; Polymerisationsinhibitoren; Katalysatoren für die thermische Vernetzung; thermolabilen radikalischen Initiatoren; Haftvermittlem; Verlaufmittein; filmbildenden Hilfsmitteln; Rheologiehilfsmitteln, wie Verdicker und strukturviskose Sag control agents, SCA; Flammschutzmitteln; Korrosionsinhibitoren; Rieselhilfen; Wachsen; Sikkativen; Bioziden und Mattierungsmitteln, enthalten.

Beispiele geeigneter Zusatzstoffe (D) werden im Detail in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, in der deutschen Patentanmeldung DE 199 14 896 A 1, Spalte 14, Zeile 26, bis Spalte 15, Zeile 46, oder in der deutschen Patentanmeldung DE 199 08 018 A 1, Seite 9, Zeile 31, bis Seite 8, Zeile 30, im Detail beschrieben. Ergänzend wird noch auf die deutschen Patentanmeldungen DE 199 04 317 A 1 und DE 198 55 125 A 1 verwiesen.

Die erfindungsgemäß zu verwendenden Dual-Cure-Beschichtungsstoffe, die die vorstehend beschriebenen Bestandteile (A) und (B) sowie ggf. (C) und/oder (D) enthalten, werden im Rahmen des erfindungsgemäßen Verfahrens insbesondere als Klarlacke für die Herstellung von Klarlackierungen verwendet.

Die pigmentierten erfindungsgemäß zu verwendenden Dual-Cure-Beschichtungsstoffe enthalten darüber hinaus noch mindestens ein Pigment (E), ausgewählt aus der Gruppe, bestehend aus organischen und anorganischen, transparenten und deckenden, farb- und/oder effektgebenden, elektrisch leitfähigen, magentisch abschirmenden und fluoreszierenden Pigmenten, Füllstoffen und Nanopartikeln.

Die pigmentierten erfindungsgemäß zu verwendenden Dual-Cure-Beschichtungsstoffe werden im Rahmen des erfindungsgemäßen Verfahrens insbesondere als Füller, Basislacke und Unidecklacke zur Herstellung von Füllerlackierungen oder Steinschlagschutzgrundierungen, Basislackierungen und Unidecklackierungen eingesetzt.

Werden ausschließlich nicht deckende, transparente Pigmente (E), insbesondere Nanopartikel (E), verwendet, können die pigmentierten erfindungsgemäß zu verwendenden Dual-Cure-Beschichtungsstoffe auch als Klarlacke verwendet werden.

Methodisch weist die Herstellung der erfindungsgemäß zu verwendenden Dual-Cure-Beschichtungsstoffe keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Zahnkranzdispergatoren, Druckentspannungsdüsen und/oder Microfluidizer vorzugsweise unter Ausschluß von aktinischer Strahlung.

Die resultierenden erfindungsgemäß zu verwendenden Dual-Cure-Beschichtungsstoffe sind konventionelle, organische Lösemittel enthaltende Beschichtungsstoffe, wäßrige Beschichtungsstoffe, im wesentlichen oder völlig lösemittel- und wasserfreie flüssige Beschichtungsstoffe (100%-Systeme), im wesentlichen oder völlig lösemittel- und wasserfreie feste Beschichtungsstoffe (Pulverlacke) oder im wesentlichen oder völlig lösemittelfreie Pulverlacksuspensionen (Pulverslurries). Außerdem können sie Einkomponentensysteme, in denen die Bindemittel (A) und die Vernetzungsmittel (C) nebeneinander vorliegen, oder Zwei- oder Mehrkomponentensysteme, in denen die Bindemittel (A) und die Vernetzungsmittel (C) bis kurz vor der Applikation getrennt voneinander vorliegen, sein.

Die nach dem erfindungsgemäßen Verfahren hergestellten erfindungsgemäßen Beschichtungen, insbesondere die erfindungsgemäßen ein- oder mehrschichtigen farb- und/oder effektgebenden Lackierungen und Klarladcierungen sind einfach herzustellen und weisen hervorragende optische Eigenschaften und eine sehr hohe Licht-, Chemikalien-, Wasser-, Schwitzwasser-, Witterungsbeständigkeit und Etch-Beständigkeit auf. Insbesondere sind sie frei von Trübungen und Inhomogenitäten. Sie weisen einen sehr gutes Reflow-Verhalten und eine hervorragende Kratzfestigkeit bei einer hohen Härte auf. Besonders hervorzuheben sind ihre hervorragende Vergilbungsbeständigkeit und Überbrennstabilität.

Ein weiterer Vorteil des erfindungsgemäßen Verfahrens ist, daß die erfindungsgemäß zu verwendenden Dual-Cure-Beschichtungsstoffe auch in den Schattenzonen komplex geformter dreidimensionaler Substrate, wie Karosserien, Radiatoren oder elektrische Wickelgüter, auch ohne optimale, insbesondere vollständige, Ausleuchtung der Schattenzonen mit aktinischer Strahlung Beschichtungen liefern, deren anwendungstechnisches Eigenschaftsprofil an das der Beschichtungen außerhalb der Schattenzonen zumindest heranreicht. Dadurch werden die in den Schattenzonen befindlichen Beschichtungen auch nicht mehr leicht durch mechanische und/oder chemische Einwirkung geschädigt, was beispielsweise in der Linie beim Einbau weiterer Bestandteile von Kraftfahrzeugen in die beschichteten Karosserien eintreten kann.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet sind, bei einem besonders vorteilhaften anwendungstechnischen Eigenschaftsprofil eine besonders lange Gebrauchsdauer auf, was sie wirtschaftlich und ökologisch besonders attraktiv macht.

**Beispiele und Vergleichsversuche**

**Herstellbeispiel 1**

**Die Herstellung eines Methacrylatcopolymerisats (A)**

In einem geeigneten Reaktor, ausgerüstet mit einem Rührer, zwei Tropftrichtern für die Monomermischung und die Initiatorlösung, Stickstoffeinleitungsrohr, Thermometer, Heizung und Rückflußkühler, wurde 650 Gewichtsteile einer Fraktion aromatischer Kohlenwasserstoffe mit einem Siedebereich von 158 bis 172 °C eingewogen. Das Lösemittel wurde auf 140 °C erhitzt. Hiernach wurden eine Monomermischung aus 652 Gewichtsteilen Ethylhexylacrylat, 383 Gewichtsteilen 2-Hydroxyethylmethacrylat, 143 Gewichtsteilen Styrol, 212 Gewichtsteilen 4-Hydroxybutylacrylat und 21 Gewichtsteile Acrylsäure innerhalb von vier Stunden und eine Initiatorlösung aus 113 Gewichtsteilen des aromatischen Lösemittels und 113 Gewichtsteilen tert.-Butylperethylhexanoat innerhalb von 4,5 Stunden gleichmäßig in die Vorlage zudosiert. Mit der Dosierung der Monomermischung und der Initiatorlösung wurde gleichzeitig begonnen. Nach der Beendigung des Initiatorzulaufs wurde die resultierende Reaktionsmischung während weiterer zwei Stunden auf 140 °C unter Rühren erhitzt und anschließend abgekühlt. Die resultierende Lösung des Methacrylatcopolymerisats (A) wurde mit einem Gemisch aus 1-Methoxypropylacetat-2, Butylglykolacetat und Butylacetat verdünnt.

Die resultierende Lösung wies einen Feststoffgehalt von 65 Gew.-%, bestimmt in einem Umluftofen (eine Stunde/130 °C), eine Säurezahl von 15 mg KOH/g Festkörper, eine OH-Zahl von 175 mg KOH/g Festkörper und eine Glasübergangstemperatur von -21 °C auf.

**Herstellbeispiele 2 bis 4**

**Die Herstellung erfindungsgemäß zu verwendender Klarlacke**

Die Klarlacke wurden durch das Vermischen der in der Tabelle angegebenen Bestandteile in der angegebenen Reihenfolge und Homogenisieren der resultierende Mischung hergestellt.

Tabelle:

| Die stofflichen Zusammensetzung der KlarlackeZ | | | |
|---|---|---|---|
| **Bestandteil** | **Gewichtsteile Herstellbeispiel:** | | |
| | **2** | **3** | **4** |
| Stammlack: | | | |
| Methacrylatcopolymerisat des Herstellbeispiels 1 | 35,9 35,9 | 35,9 | |
| Dipentaerythritpentaacrylat | 20 20 | 20 | |
| UV-Absorber (substituiertes Hydroxyphenyltriazin) | 1,0 1,0 | 1,0 | |
| HALS (N-Methyl-2,2,6,6-tetramethylpiperidinylester) | 1,0 1,0 | 1,0 | |
| Netzmittel (Byk ® 306 der Firma Byk Chemie) | 0,4 0,4 | 0,4 | |
| Butylacetat | 27,4 27,4 | 27,4 | |
| Solventnaphtha ® | 10,8 13,3 | 12,6 | |
| Irgacure ® 184 (handelsüblicher Photoinitiator der Firma Ciba Specialty Chemicals) | 2,0 | 1,0 | - |
| Genocure ® MBF (handelsüblicher Photoinitiator der Firma Rahn) | 1,0 | 0,5 | - |
| Lucirin ® TPO (handelsüblicher Photoinitiator der Firma BASF AG) | 0,5 1,0 | 0,2 | |
| **Summe:** | **100 100** | **100** | |
| Vernetzungsmittelkomponente (C): | | | |
| **Summe:** | **38,28 38,28** | **38,28** | |
| Vernetzungsmittel (C 1): | | | |
| Isocyanatoacrylat Roskydal ® UA VPLS 2337 der Firma Bayer AG (Basis: Trimeres Hexamethylen-diisocyanat; Gehalt an Isocyanatgruppen: 12 Gew.-%) | 27,84 27,84 | 27,84 | |
| Vernetzungsmittel (C 2): | | | |
| Isocyanatoacrylat auf der Basis des Trimeren von Isophorondiisocyanat (70,5 %ig in Butylacetat; Viskosität: 1.500 mPas; Gehalt an Isocyanatgruppen: 6,7 Gew.-%; hergestellt analog Beispiel 1 der EP 0 928 800 A 1) | 6,96 6,96 | 6,96 | |
| Verdünner | 3,48 3,48 | 3,48 | |

Der Klarlacke wiesen eine sehr gute Topfzeit und ein sehr gutes Applikationsverhalten auf.

**Beispiele 1 bis 4**

**Die Herstellung erfindungsgemäßer Mehrschichtlackierungen mit Hilfe des erfindungsgemäßen Verfahrens**

Für das Beispiel 1 wurde der Klarlack des Herstellbeispiels 2 verwendet.

Für die Beispiele 2 und 3 wurde der Klarlack des Herstellbeispiels 3 verwendet.

Für das Beispiel 4 wurde der Klarlack des Herstellbeispiels 4 verwendet.

Zur Herstellung der erfindungsgemäßen Mehrschichtlackierungen wurden Stahltafeln nacheinander mit einer kathodisch abgeschiedenen und während 20 Minuten bei 170 °C eingebrannten Elektrotauchlackierung einer Trockenschichtdicke von 18 bis 22 μm beschichtet. Anschließend wurden die Stahltafeln mit einem handelsüblichen Zweikomponenten-Wasserfüller von BASF Coatings AG, wie er üblicherweise für Kunststoffsubstrate verwendet wird, beschichtet. Die resultierende Füllerschicht wurde während 30 Minuten bei 90 °C eingebrannt, so daß eine Trockenschichtdicke von 35 bis 40 μm resultierte. Hiernach wurde ein handelsüblicher schwarzer Wasserbasislack von BASF Coatings AG mit einer Schichtdicke von 12 bis 15 μm appliziert, wonach die resultierenden Wasserbasislackschichten während zehn Minuten bei 80 °C abgelüftet wurden. Anschließend wurden die Klarlacke mit einer Schichtdicke von 40 bis 45 μm in einem Kreuzgang mit einer Fließbecherpistole pneumatisch appliziert. Die Härtung der Wasserbasislackschichten und der Klarlackschichten erfolgte während 5 Minuten bei Raumtemperatur, während 10 Minuten bei 80 °C, gefolgt von einer Bestrahlung mit UV-Licht einer Dosis von 1.500 mJ/cm$^2$, und abschließend während 20 Minuten bei 140 °C.

Bei den Beispielen 1 bis 4 wurden bei der Bestrahlung sauerstoffabgereicherte Atmosphären mit unterschiedlichen Sauerstoffgehalten angewandt:

Beispiel 1: Luft/Stickstoff mit 20 Vol.-% Sauerstoff,

Beispiel 2: Luft/Stickstoff mit 14 Vol.-% Sauerstoff;

Beispiel 3: Luft/Stickstoff mit 9 Vol.-% Sauerstoff; und

Beispiel 4: Luft/Stickstoff mit 5 Vol.-% Sauerstoff.

Die erfindungsgemäßen Mehrschichtlackierungen der Beispiele 1 bis 4 wiesen ein hervorragendes Eigenschaftsprofil auf.

Sie waren sehr brillant und wiesen einen Glanz (20 °) nach DIN 67530 von 90,5 auf. Die Mikroeindringhärte (Universalhärte bei 25,6 mN, Fischerscope 100V mit Diamantenpyramide nach Vickers) lag bei 138,1.

Die Kratzfestigkeit wurde mit Hilfe des Sandtests (vgl. die deutsche Patentanmeldung DE 198 39 453 A 1, Seite 9, Zeilen 1 bis 63) anhand der vorstehend beschriebenen Prüfbleche beurteilt. Der Glanzverlust nach Beschädigung konnte durch die Sauerstoffabreicherung signifikant verringert werden:

Beispiel 1: Glanzverlust 10 Einheiten (20°);

Beispiel 2: Glanzverlust 7 Einheiten (20°);

Beispiel 3: Glanzverlust 5 Einheiten (20°); und

Beispiel 4: Glanzverlust 3,5 Einheiten (20°).

Außerdem wurde die Kratzfestigkeit mit Hilfe des Bürstentests (vgl. die deutsche Patentanmeldung DE 198 39 453 A 1, Seite 9, Zeilen 17 bis 63) anhand der vorstehend beschriebenen Prüfbleche beurteilt. Auch hier konnte der Glanzverlust nach Beschädigung durch die Sauerstoffabreicherung signifikant verringert werden:

Beispiel 1: Glanzverlust 4 Einheiten (20°);

Beispiel 2: Glanzverlust 3 Einheiten (20°);

Beispiel 3: Glanzverlust 2,5 Einheiten (20°); und

Beispiel 4: Glanzverlust 1,5 Einheiten (20°).

Bei dem in der Fachwelt bekannten DaimlerChrysler-Gradientenofentest zeigten sich erste Beschädigungen der erfindungsgemäßen Mehrschichtlackierungen durch Schwefelsäure erst ab einer Temperatur von 53 °C und durch Baumharz erst ab 55 °Celsius. Auch die Etch-Beständigkeit war hervorragend.

**Beispiel 5**

**Die Herstellung erfindungsgemäßer Mehrschichtlackierungen mit Hilfe des erfindungsgemäßen Verfahrens**

Für das Beispiel 5 wurde der Klarlack des Herstellbeispiels 4 verwendet.

Beispiel 4 wurde wiederholt, nur daß anstelle des schwarzen Wasserbasislacks ein weißer Wasserbasislack verwendet wurde.

Die resultierende Mehrschichtlackierung wurde farbmetrisch vermessen. Sie wies nach dem Einbrennen einen b-Wert (vgl. Römpp Lexikon Lacke und Druckfarben, Stuttgart, New York, 1998, "CIELAB-Farbabstandsformel", Seiten 114 und 115) von nur 1,1 auf. Der b-Wert blieb nach einer Woche Dunkellagerung konstant. Nach einer Woche Dachauslage mit hohem Sonnenlichtanteil war der b-Wert nur um 0,18 Einheiten abgesunken, was die hohe Farbtonstabilität untermauerte.

Der b-Wert war selbst nach dem Überbrennen der frisch lackierten Prüftafeln während 30 min bei 185°C nur um 4 Einheiten angestiegen, was die hohe Überbrennstabilität belegte.

Nach 3.000 h einer Kurzbewitterung mit dem in der Fachwelt bekannten CAM 180-Test, wie er in der Automobilindustrie Standard ist, war der b-Wert lediglich um 0,1 Einheiten angestiegen, was die hohe Farbtonstabilität und Vergilbungsbeständigkeit erneut bestätigte.

**Patentansprüche**

1. Verfahren zur Herstellung von Beschichtungen aus thermisch und mit aktinischer Strahlung härtbaren Beschichtungsstoffen, bei dem man

   (I) die Beschichtungsstoffe auf grundierte oder ungrundierte Substrate oder auf hierauf befindliche ungehärtete, partiell gehärtete und/oder vollständig gehärtete Lackschichten appliziert und

   (II) die resultierenden Schichten aus den Beschichtungsstoffen für sich alleine oder gemeinsam mit den ungehärteten und/oder partiell gehärteten Lackschichten thermisch und mit aktinischer Strahlung härtet,

   **dadurch gekennzeichnet, daß**

   (1) die Härtung mit aktinischer Strahlung unter einer sauerstoffabgereicherten Atmosphäre durchgeführt wird und

   (2) die thermisch und mit aktinischer Strahlung härtbaren Beschichtungsstoffe

   (A) mindestens ein Bindemittel, ausgewählt aus der Gruppe, bestehend aus (Meth)Acrylatcopolymerisaten, die eine OH-Zahl von 100 bis 220 mg KOH/g, eine Glasübergangstemperatur von -35 bis +60°C, ein zahlenmittleres Molekulargewicht von 1.000 bis 10.000 Dalton und ein massenmittleres Molekulargewicht von 2.000 bis 40.000 Dalton aufweisen und die eine der OH-Zahl entsprechende Menge an hydroxylgruppenhaltigen olefinisch ungesättigten Monomeren (a) einpolymerisiert enthalten, wovon

   (a1) 20 bis 90 Gew.-%, bezogen auf die hydroxylgruppenhaltigen Monomeren (a), aus der Gruppe, bestehend aus 4-Hydroxybutyl(meth)acrylat und 2-Alkyl-propan-1,3-diol-mono(meth)acrylat, und

   (a2) 10 bis 80 Gew.-%, bezogen auf die hydroxylgruppenhaltigen Monomeren (a), aus der Gruppe, bestehend aus sonstigen hydroxylgruppenhaltigen olefinisch ungesättigten Monomeren,

   ausgewählt werden;
   und

   (B) 0,2 bis 8 Gew.-%, bezogen auf den Festkörper des Beschichtungsstoffs, mindestens eines Photoinitiators

enthalten.

2. Verfahren nach Anspruch 1, **dadurch gekennzeichnet, daß** der Sauerstoffgehalt der sauerstoffabgereicherten Atmosphäre bei maximal 18 Vol.-% liegt.

3. Verfahren nach Anspruch 1 oder 2, **dadurch gekennzeichnet, daß** der Sauerstoffgehalt der sauerstoffabgereicherten Atmosphäre bei mindestens 0,1 Vol.-% liegt.

4. Verfahren nach einem der Ansprüche 1 bis 3, **dadurch gekennzeichnet, daß** der Sauerstoffgehalt der Atmosphäre durch die Zugabe mindestens eines Inertgases eingestellt wird.

5. Verfahren nach Anspruch 4, **dadurch gekennzeichnet, daß** das Inertgas aus der Gruppe, bestehend aus Stickstoff, Kohlendioxid, Helium, Neon und Argon, ausgewählt wird.

6. Verfahren nach einem der Ansprüche 1 bis 5, **dadurch gekennzeichnet, daß** die 2-Alkyl-propan-1,3-diol-mono(meth)acrylate (a1) aus der Gruppe, bestehend aus 2-Methyl-, 2-Ethyl-, 2-Propyl-, 2-Isopropyl- oder 2-n-Butyl-propan-1,3-diol-mono(meth)acrylat, ausgewählt werden.

7. Verfahren nach Anspruch 6, **dadurch gekennzeichet, daß** 2-Methyl-1,3-diol-mono(meth)acrylat (a1) verwendet wird.

8. Verfahren nach einem der Ansprüche 1 bis 7, **dadurch gekennzeichnet, daß** die Monomeren (a2) aus der Gruppe, bestehend aus Hydroxyalkylestern von olefinisch ungesättigen Carbon-, Sulfon- und Phosphonsäuren und sauren Phosphor- und Schwefelsäureestern, Allylalkohol, ethoxyliertem und propoxyliertem Allylalkohol und Umsetzungsprodukten von olefinisch ungesättigen Carbon-, Sulfon- und Phosphonsäuren und sauren Phosphor- und Schwefelsäureestern mit dem Glycidylester einer in alpha-Stellung verzweigten Monocarbonsäure mit 5 bis 18 Kohlenstoffatomen im Molekül, ausgewählt werden.

9. Verfahren nach einem der Ansprüche 1 bis 8, **dadurch gekennzeichnet, daß** die (Meth)Acrylatcopolymerisate (A) im Molekül im statistischen Mittel

   (i) mindestens eine von der Hydroxylgruppe verschiedene reaktive funktionelle Gruppe im Molekül, die mit sich selbst oder mit komplementären reaktiven funktionellen Gruppen thermisch initiierte Vernetzungsreaktionen eingeht, und/oder

   (ii) mindestens eine reaktive funktionelle Gruppe mit mindestens einer mit aktinischer Strahlung aktivierbaren Bindung aufweist,

   enthalten.

10. Verfahren nach einem der Ansprüche 1 bis 9, **dadurch gekennzeichnet, daß** die Beschichtungsstoffe noch mindestens einen Bestandteil, ausgewählt aus der Gruppe, bestehend aus niedermolekularen und von den (Meth)Acrylatcopolymerisaten (A) verschiedenen oligomeren und polymeren Verbindungen (C), die im statistischen Mittel

    (i) mindestens eine reaktive funktionelle Gruppe, die mit komplementären reaktiven funktionellen Gruppen thermisch initiierte Vernetzungsreaktionen eingehen können, und/oder

    (ii) mindestens eine reaktive funktionelle Gruppe mit mindestens einer mit aktinischer Strahlung aktivierbaren Bindung

    im Molekül aufweisen, enthalten.

11. Verfahren nach Anspruch 9 oder 10, **dadurch gekennzeichnet, daß** die mit aktinischer Strahlung aktivierbaren Bindungen aus der Gruppe, bestehend aus Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen, ausgewählt werden.

12. Verfahren nach Anspruch 11, **dadurch gekennzeichnet, daß** die Doppelbindungen Kohlenstoff-Kohlenstoff-Doppelbindungen sind.

**13.** Verfahren nach Anspruch 12, **dadurch gekennzeichnet, daß** die reaktiven funktionellen Gruppen (ii), aus der Gruppe, bestehend aus (Meth)Acrylat-, Ethacrylat-, Crotonat-, Cinnamat-, Vinylether-, Vinylester-, Dicyclopentadienyl-, Norbomenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbomenyl-, Isoprenyl-, Isopropenyl-, Allyl- oder Butenylestergruppen, ausgewählt werden.

**14.** Verfahren nach Anspruch 13, **dadurch gekennzeichnet, daß** Acrylatgruppen (ii) verwendet werden.

**15.** Verfahren nach einem der Ansprüche 9 bis 14, **dadurch gekennzeichnet, daß** die komplementären reaktiven funktionellen Gruppen (i) zum einen aus der Gruppe, bestehend aus Thiol-, Amino-, N-Methylolamino-, N-Alkoxymethylamino-, Imino-, Carbamat-, Allophanat- und/oder Carboxylgruppen, und zum anderen aus der Gruppe bestehend aus Anhydrid-, Carboxyl-, Epoxy-, blockierten und unblockierten Isocyanat-, Urethan-, Alkoxycarbonylamino- Methylol-, Methylolether-, Carbonat-, Amino- und/oder beta-Hydroxyalkylamidgruppen, ausgewählt werden.

**16.** Verfahren nach einem der Ansprüche 1 bis 15, **dadurch gekennzeichnet, daß** die Beschichtungsstoffe mindestens einen Zusatzstoff (D), ausgewählt aus der Gruppe, bestehend aus physikalisch oder rein thermisch härtbaren, von den Bindemitteln (A) verschiedenen Bindemitteln; thermisch härtbaren Reaktivverdünnern; molekulardispers löslichen Farbstoffen; Lichtschutzmitteln, wie UV-Absorber und reversible Radikalfänger (HALS); Antioxidantien; niedrig- und hochsiedenden organischen Lösemitteln; Entlüftungsmitteln; Netzmitteln; Emulgatoren; Slipadditiven; Polymerisationsinhibitoren; Katalysatoren für die thermische Vernetzung; thermolabilen radikalischen Initiatoren; Haftvermittlern; Verlaufmitteln; filmbildenden Hilfsmitteln; Rheologiehilfsmitteln, wie Verdicker, Flammschutzmitteln; Korrosionsinhibitoren; Rieselhilfen; Wachsen; Sikkativen; Bioziden und Mattierungsmitteln, enthalten.

**17.** Verfahren nach einem der Ansprüche 1 bis 16, **dadurch gekennzeichnet, daß** die Beschichtungsstoffe mindestens ein Pigment (E), ausgewählt aus der Gruppe, bestehend aus organischen und anorganischen, transparenten und deckenden, farb- und/oder effektgebenden, elektrisch leitfähigen, magnetisch abschirmenden und fluoreszierenden Pigmenten, Füllstoffen und Nanopartikeln, enthalten.

**18.** Verfahren nach einem der Ansprüche 1 bis 17, **dadurch gekennzeichnet, daß**

- die Substrate Kraftfahrzeugkarosserien oder Teile hiervon, Bauwerke oder Teile hiervon, Fenster, Türen, Möbel, Coils, Container, Emballagen, Kleinteile für den privaten und industriellen Gebrauch und weiße Waren,

- die Grundierungen Primer, Haftschichten, Elektrotauchlackierungen Füllerlackierungen oder Steinschlagschutzgrundierungen und

- die Lackschichten Basisladcschichten oder Klarlackschichten sind.

**19.** Ein- und mehrschichtige Klarlackierungen und ein- und mehrschichtige farb- und/oder effektgebende, elektrisch leitfähige, magnetisch abschirmende und fluoreszierende Lackierungen, herstellbar nach einem Verfahren gemäß einem der Ansprüche 1 bis 18.

**Claims**

**1.** Process for producing coatings from coating materials curable thermally and with actinic radiation, in which

(I) the coating materials are applied to primed or unprimed substrates or to uncured, part-cured and/or fully cured coating films present on said substrates, and

(II) the resulting films of the coating materials are cured thermally and with actinic radiation, alone or together with the uncured and/or part-cured coating films,

**characterized in that** it comprises

(1) conducting the actinic radiation cure under an oxygen-depleted atmosphere and

(2) the coating materials curable thermally and with actinic radiation comprising

(A) at least one binder selected from the group consisting of meth(acrylate) copolymers which have an OH number of from 100 to 220 mg KOH/g a glass transition temperature of -35 to +60°C, a number-average molecular weight of from 1 000 to 10 000 daltons and a mass-average molecular weight of from 2 000 to 40 000 daltons and which contain in copolymerized form an amount of hydroxyl-containing olefinically unsaturated monomers (a) that corresponds to the OH number, of which

(a1) from 20 to 90% by weight, based on the hydroxyl-containing monomers (a), are selected from the group consisting of 4-hydroxybutyl (meth)-acrylate and/or 2-alkylpropane-1,3-diol mono(meth) acrylate, and

(a2) from 10 to 80% by weight, based on the hydroxyl-containing monomers (a), are selected from the group consisting of other hydroxyl-containing olefinically unsaturated monomers;

and

(B) from 0.2 to 8% by weight, based on the solids of the coating material, of at least one photoinitiator.

2. Process according to Claim 1, **characterized in that** the oxygen content of the oxygen-depleted atmosphere is not more than 18% by volume.

3. Process according to Claim 1 or 2, **characterized in that** the oxygen content of the oxygen-depleted atmosphere is at least 0.1% by volume.

4. Process according to any of Claims 1 to 3, **characterized in that** the oxygen content of the atmosphere is set by adding at least one inert gas.

5. Process according to Claim 4, **characterized in that** the inert gas is selected from the group consisting of nitrogen, carbon dioxide, helium, neon, and argon.

6. Process according to any of Claims 1 to 5, **characterized in that** the 2-alkylpropane-1,3-diol mono(meth)acrylates (a1) are selected from the group consisting of 2-methyl-, 2-ethyl-, 2-propyl-, 2-isopropyl-, and 2-n-butylpropane-1,3-diol mono(meth)acrylate.

7. Process according to Claim 6, **characterized in that** 2-methyl-1,3-diol mono(meth)acrylate (a1) is used.

8. Process according to any of Claims 1 to 7, **characterized in that** the monomers (a2) are selected from the group consisting of hydroxyalkyl esters of olefinically unsaturated carboxylic, sulphonic and phosphonic acids and acidic phosphoric and sulphuric esters, allyl alcohol, ethoxylated and propoxylated allyl alcohol and reaction products of olefinically unsaturated carboxylic, sulphonic and phosphonic acids and acidic phosphoric and sulphuric esters with the glycidyl ester of an alpha-branched monocarboxylic acid having from 5 to 18 carbon atoms in the molecule.

9. Process according to any of Claims 1 to 8, **characterized in that** the (meth)acrylate copolymers (A) contain on average per molecule

(i) at least one nonhydroxyl, reactive functional group which undergoes thermally initiated crosslinking reactions with itself or with complementary reactive functional groups, and/or

(ii) at least one reactive functional group having at least one bond which can be activated with actinic radiation.

10. Process according to any of Claims 1 to 9, **characterized in that** the coating materials further comprise at least one constituent selected from the group consisting of low molecular mass, oligomeric and polymeric compounds (C) other than the (meth)acrylate copolymers (A), which contain on average per molecule

(i) at least one reactive functional group capable of thermally initiated crosslinking reactions with complementary reactive functional groups, and/or

(ii) at least one reactive functional group having at least one bond which can be activated with actinic radiation.

**11.** Process according to Claim 9 or 10, **characterized in that** the bonds which can be activated with actinic radiation are selected from the group consisting of carbon-hydrogen single bonds or carbon-carbon, carbon-oxygen, carbon-nitrogen, carbon-phosphorus, and carbon-silicon single bonds and double bonds.

**12.** Process according to Claim 11, **characterized in that** the double bonds are carbon-carbon double bonds.

**13.** Process according to Claim 12, **characterized in that** the reactive functional groups (ii) are selected from the group consisting of (meth)acrylate, ethacrylate, crotonate, cinnamate, vinyl ether, vinyl ester, dicyclopentadienyl, norbornenyl, isoprenyl, isopropenyl, allyl, or butenyl groups; dicyclopentadienyl ether, norbornenyl ether, isoprenyl ether, isopropenyl ether, allyl ether, or butenyl ether groups; or dicyclopentadienyl ester, norbornenyl ester, isoprenyl ester, isopropenyl ester, allyl ester, or butenyl ester groups.

**14.** Process according to Claim 13, **characterized in that** acrylate groups (ii) are used.

**15.** Process according to any of Claims 9 to 14, **characterized in that** the complementary reactive functional groups (i) are selected on the one hand from the group consisting of thiol, amino, N-methylolamino, N-alkoxymethylamino, imino, carbamate, allophanate and/or carboxyl groups and on the other hand from the group consisting of anhydride, carboxyl, epoxy, blocked and unblocked isocyanate, urethane, alkoxycarbonylamino, methylol, methylol ether, carbonate, amino and/or beta-hydroxyalkylamide groups.

**16.** Process according to any of Claims 1 to 15, **characterized in that** the coating materials comprise at least one additive (D) selected from the group consisting of binders other than the binders (A) and curable physically or by means of heat alone; thermally curable reactive diluents; molecularly dispersely soluble dyes; light stabilizers, such as UV absorbers and reversible free-radical scavengers (HALS); antioxidants; low-boiling and high-boiling organic solvents; devolatilizers; wetting agents; emulsifiers; slip additives; polymerization inhibitors; thermal crosslinking catalysts; thermolabile free-radical initiators; adhesion promoters; levelling agents; film formation auxiliaries; rheological aids, such as thickeners; flame retardants; corrosion inhibitors; free-flow aids; waxes; siccatives; biocides, and flatting agents.

**17.** Process according to any of Claims 1 to 16, **characterized in that** the coating materials comprise at least one pigment (E) selected from the group consisting of organic and inorganic, transparent and hiding, colour and/or effect, electrically conductive, magnetically shielding, and fluorescent pigments, fillers, and nanoparticles.

**18.** Process according to any of Claims 1 to 17, **characterized in that**

- the substrates are motor vehicle bodies or parts thereof, buildings or parts thereof, windows, doors, furniture, coils, containers, packaging, small parts for private and industrial use, and white goods,

- the primer coats are primers, tie coats, electrocoats, primer-surfacer coats or anti-stonechip primer coats, and

- the coating films are basecoat films or clearcoat films.

**19.** Single-coat and multicoat clearcoats and single-coat and multicoat colour and/or effect, electrically conductive, magnetically shielding and fluorescent paint systems, producible by a process according to any of Claims 1 to 18.

**Revendications**

**1.** Procédé de préparation de revêtements à partir de substances de revêtement durcissables par voie thermique et avec un rayonnement actinique, dans lequel

(I) on applique les substances de revêtement sur des substrats munis ou non d'une couche de fond ou sur des couches de laque situées dessus, non durcies, partiellement durcies et/ou complètement durcies, et
(II) on durcit les couches résultantes à base des substances de revêtement en soi seules ou conjointement aux couches de laque non durcies et/ou partiellement durcies, par voie thermique et avec un rayonnement actinique,

**caractérisé en ce que**

(1) le durcissement est effectué avec un rayonnement actinique sous une atmosphère appauvrie en oxygène, et

(2) les substances de revêtement durcissables par voie thermique et avec un rayonnement actinique contiennent

(A) au moins un liant choisi parmi le groupe constitué de copolymères (méth)acryliques qui présentent un indice de OH de 100 à 220 mg de KOH/g, une température de transition vitreuse de -35 à +60°C, un poids moléculaire moyen numérique de 1000 à 10.000 daltons et un poids moléculaire moyen pondéral de 2000 à 40.000 daltons et qui contiennent, à l'état copolymérisé, une quantité correspondant à l'indice de OH de monomères oléfiniquement insaturés contenant des groupes hydroxyle (a), dont

(a1) 20 à 90 % en poids, par rapport aux monomères contenant des groupes hydroxyle (a), sont choisis parmi le groupe constitué de (méth)acrylate de 4-hydroxybutyle et de mono(méth)acrylate de 2-alkyl-propane-1,3-diol, et

(a2) 10 à 80 % en poids, par rapport aux monomères contenant des groupes hydroxyle (a), sont choisis parmi le groupe constitué d'autres monomères oléfiniquement insaturés, contenant des groupes hydroxyle,

et

(B) 0,2 à 8 % en poids, par rapport à la matière solide de la substance de revêtement, d'au moins un photoamorceur.

2. Procédé suivant la revendication 1, **caractérisé en ce que** la teneur en oxygène de l'atmosphère appauvrie en oxygène est au maximum de 18 % en volume.

3. Procédé suivant la revendication 1 ou 2, **caractérisé en ce que** la teneur en oxygène de l'atmosphère appauvrie en oxygène est au moins de 0,1 % en volume.

4. Procédé suivant l'une des revendications 1 à 3, **caractérisé en ce que** la teneur en oxygène de l'atmosphère est ajustée par l'addition d'au moins un gaz inerte.

5. Procédé suivant la revendication 4, **caractérisé en ce que** le gaz inerte est choisi parmi le groupe constitué de l'azote, du dioxyde de carbone, de l'hélium, du néon et de l'argon.

6. Procédé suivant l'une des revendications 1 à 5, **caractérisé en ce que** les mono(méth)acrylates de 2-alkyl-propane-1,3-diol (a1) sont choisis parmi le groupe constitué de mono(méth)acrylate de 2-méthyl-, 2-éthyl-, 2-propyl-, 2-isopropyl- ou 2-n-butyl-propane-1,3-diol.

7. Procédé suivant la revendication 6, **caractérisé en ce qu'**on utilise du mono(méth)acrylate de 2-méthyl-1,3-diol (a1).

8. Procédé suivant l'une des revendications 1 à 7, **caractérisé en ce que** les monomères (a2) sont choisis parmi le groupe constitué d'esters hydroxyalkyliques d'acides phosphoniques, sulfoniques et carboxyliques oléfiniquement insaturés et d'esters acides d'acide phosphorique et d'acide sulfurique, d'alcool allylique, d'alcool allylique éthoxylé et propoxylé et de produits de réaction d'acides phosphoniques, sulfoniques, carboxyliques oléfiniquement insaturés et d'esters acides d'acide phosporique et d'acide sulfurique avec l'ester glycidylique d'un acide monocarboxylique ramifié en position alpha, comportant 5 à 18 atomes de carbone dans la molécule.

9. Procédé suivant l'une des revendications 1 à 8, **caractérisé en ce que** les copolymères (méth)acryliques (A) contiennent dans la molécule, en moyenne statistique,

(i) au moins un groupe fonctionnel réactif, différent du groupe hydroxyle, dans la molécule, qui donne lieu lui-même ou avec des groupes fonctionnels réactifs complémentaires à des réactions de réticulation thermiquement amorcées, et/ou

(ii) au moins un groupe fonctionnel réactif comportant au moins une liaison activable par un rayonnement actinique.

**10.** Procédé suivant l'une des revendications 1 à 9, **caractérisé en ce que** les substances de revêtement contiennent encore au moins un composant choisi parmi le groupe constitué de composés polymères et oligomères différents des copolymères (méth)acryliques (A) et de faible poids moléculaire (C) qui, en moyenne statistique, présentent dans la molécule

(i) au moins un groupe fonctionnel réactif qui peut donner lieu avec des groupes fonctionnels réactifs complémentaires à des réactions de réticulation thermiquement amorcées, et/ou

(ii) au moins un groupe fonctionnel réactif comportant au moins une liaison activable par un rayonnement actinique.

**11.** Procédé suivant la revendication 9 ou 10, **caractérisé en ce que** les liaisons activables par un rayonnement actinique sont choisies parmi le groupe constitué de liaisons simples carbone-hydrogène ou de liaisons simples ou doubles carbone-carbone, carbone-oxygène, carbone-azote, carbone-phosphore ou carbone-silicium.

**12.** Procédé suivant la revendication 11, **caractérisé en ce que** les doubles liaisons sont des doubles liaisons carbone-carbone.

**13.** Procédé suivant la revendication 12, **caractérisé en ce que** les groupes fonctionnels réactifs (ii) sont choisis parmi le groupe constitué de groupes (méth)acrylate, éthacrylate, crotonate, cinnamate, éther vinylique, ester vinylique, dicyclopentadiényle, norbornényle, isoprényle, isopropényle, allyle ou butényle, de groupes éther dicyclopentadiénylique, norbornénylique, isoprénylique, isopropénylique, allylique ou buténylique ou de groupes ester dicyclopentadiénylique, norbornénylique, isoprénylique, isopropénylique, allylique ou buténylique.

**14.** Procédé suivant la revendication 13, **caractérisé en ce qu'**on utilise des groupes acrylate (ii).

**15.** Procédé suivant l'une des revendications 9 à 14, **caractérisé en ce que** les groupes fonctionnels réactifs complémentaires (i) sont choisis, d'une part, parmi le groupe constitué de groupes thiol, amino, N-méthylolamino, N-alcoxyméthylamino, imino, carbamate, allophanate et/ou carboxyle, et, d'autre part, parmi le groupe constitué de groupes anhydride, carboxyle, époxy, isocyanate bloqué et non bloqué, uréthanne, alcoxycarbonylamino, méthylol, méthyloléther, carbonate, amino et/ou bêta-hydroxyalkylamide.

**16.** Procédé suivant l'une des revendications 1 à 15, **caractérisé en ce que** les substances de revêtement contiennent au moins un additif (D) choisi parmi le groupe constitué de liants durcissables par voie physique ou purement thermique, différents des liants (A), de diluants réactifs durcissables par voie thermique, de colorants solubles dispersés à l'état moléculaire, d'agents de protection contre la lumière, comme des absorbants d'U.V. et des capteurs de radicaux réversibles (HALS), d'antioxydants, de solvants organiques à point d'ébullition bas et haut, d'agents de désaération, d'agents réticulants, d'agents émulsionnants, de lubrifiants, d'inhibiteurs de polymérisation, de catalyseurs pour la réticulation thermique, d'amorceurs radicalaires thermolabiles, d'agents d'adhésion, d'agents d'étalement, d'adjuvants filmogènes, d'adjuvants de rhéologie, comme des épaississants, d'agents ignifuges, d'inhibiteurs de corrosion, d'aides au ruissellement, de cires, d'agents desséchants, de biocides et d'agents de dépolissage.

**17.** Procédé suivant l'une des revendications 1 à 16, **caractérisé en ce que** les substances de revêtement contiennent au moins un pigment (E) choisi parmi le groupe constitué de pigments, charges et nanoparticules organiques et inorganiques, transparents et couvrants, donnant de la couleur et/ou un effet, électriquement conducteurs, protecteurs du point de vue magnétique et fluorescents.

**18.** Procédé suivant l'une des revendications 1 à 17, **caractérisé en ce que**

- les substrats sont des carrosseries de véhicule ou des pièces de celles-ci, des constructions ou des parties de celles-ci, des fenêtres, des portes, des meubles, des bobines, des conteneurs, des emballages, du petit matériel d'usage privé et industriel et des produits blancs,
- les couches de fond sont des primaires, des couches adhésives, des laquages appliqués par électrodéposition, des laquages à charge ou des couches de fond pour la protection contre l'impact de pierres, et

- les couches de laque sont des couches de laque de base ou des couches de vernis transparent.

19. Vernis transparents à une ou plusieurs couches et laquages à une ou plusieurs couches, donnant de la couleur et/ou un effet, électriquement conducteurs, protecteurs du point de vue magnétique et fluorescents, que l'on peut préparer selon un procédé suivant l'une des revendications 1 à 18.